Europäisches Patentamt

European Patent Office

Office européen des brevets

(19)

(11) Numéro de publication: **0 072 840**
**B1**

(12)

# FASCICULE DE BREVET EUROPEEN

(45) Date de publication du fascicule du brevet:
02.10.85

(51) Int. Cl.⁴: **G 02 B 6/26**

(21) Numéro de dépôt: **82900666.7**

(22) Date de dépôt: **17.02.82**

(86) Numéro de dépôt international:
**PCT/NL 82/00004**

(87) Numéro de publication internationale:
**WO 82/02956 (02.09.82 Gazette 82/21)**

(54) **PROCEDE DE MULTIPLEXAGE DE VOIES DE TRANSMISSION AU SEIN D'UNE FIBRE OPTIQUE A SAUT D'INDICE ET DISPOSITIF DE MISE EN OEUVRE.**

| | |
|---|---|
| (30) Priorité: **23.02.81 FR 8103527** | (73) Titulaire: **N.V. Philips' Gloeilampenfabrieken, Groenewoudseweg 1, NL-5621 BA Eindhoven (NL)**<br>(84) Etats contractants désignés: **DE GB** |
| (43) Date de publication de la demande:<br>**02.03.83 Bulletin 83/9** | (73) Titulaire: **Laboratoires d'Electronique et de Physique Appliquée L.E.P., 3, Avenue Descartes, F-94450 Limeil-Brévannes (FR)** |
| (45) Mention de la délivrance du brevet:<br>**02.10.85 Bulletin 85/40** | (84) Etats contractants désignés: **FR** |
| (84) Etats contractants désignés:<br>**DE FR GB** | (72) Inventeur: **HUNZINGER, Jean-Jacques, 19, avenue du Général Leclerc, F-75014 Paris (FR)** |
| (56) Documents cités:<br>**FR - A - 2 266 387**<br>**GB - A - 1 441 369**<br>**US - A - 4 050 782**<br><br>Electro Optical System Design, volume 12, no. 6, juin 1980 (Chicago, US) "Fresnel lenses as fiber-optic demultiplexers", voir page 20 | (74) Mandataire: **Landousy, Christian et al, Société Civile S.P.I.D. 209, Rue de l'Université, F-75007 Paris (FR)** |

BUNDESDRUCKEREI BERLIN

## Description

La présente invention concerne un procédé de multiplexage de voies de transmission d'information par onde lumineuse au moyen d'une seule fibre optique à saut d'indice et un dispositif optique de mise en oeuvre dudit procédé.

Par fibre optique à saut d'indice, on entend dans ce qui suit que la fibre est constituée d'un matériau de »coeur« d'indice de réfraction de la lumière sensiblement uniforme, ledit coeur étant entouré d'une gaine d'indice de réfraction également sensiblement uniforme mais inférieur à celui du coeur. On sait qu'il s'ensuit que tout rayon faisant avec l'axe de la fibre un angle inférieur à l'angle d'ouverture de la fibre (égal à la moitié de l'angle dit d'acceptance), fonction des valeurs respectives des indices de réfraction des matériaux de coeur et gaine, se propage à l'intérieur de la fibre par réflexions totales multiples et successives à l'interface coeur gaine, l'angle du rayon avec l'axe de la fibre se conservant après chaque réflexion au cours de la propagation.

Il est connu de multiplier le nombre de voies de transmission sur une telle fibre optique en utilisant pour chacune d'elles une onde lumineuse de longueur d'onde particulière et différente d'une voie à l'autre. Un tel procédé demande un filtrage spectral de la lumière aussi bien lors de son injection dans la fibre que lors de sa réception en sorties de fibres. Ce procédé, de par son principe même, ne limite pas le nombre de modes de propagation générés dans la fibre, si bien que la bande passante de la transmission ne s'en trouve pas améliorée.

Le procédé selon l'invention présente de ce point de vue bon nomre d'avantages.D'une part, la lummière utilisée a même longueur d'onde pour toutes les voies de multiplexage. D'autre part, de par son principe, dans chaque voie, le nombre de modes de propagation se trouve limité, si bien qu'il en résulte un accroissement de la bande passante dans chaque voie.

Le procédé se fonde sur la conservation pour chaque rayon delumière de son angle avec l'axe de la fibre au cours de sa propagation au sein de la fibre. L'invention pense alors à former des voies de transmission à l'intérieur de la fibre à l'aide derayons de lumière groupés en fonction des valeurs de leur angle avec l'axe de la fibre, chaque voie étant munie de moyens d'injection de lumière à l'entrée de la fibre et de moyens de réception en sortie, spécifiques de ces valeurs d'angle.

Pour chaque voie de transmission, la valeur de l'angle des rayons est comprise entre deux valeurs assez proches l'une de l'autre, si bien que les rayons relatifs à chaque voie de transmission se trouvent compris en tout point de la fibre entre deux cônes ayant pour sommet commun ledit point et de révolution autour d'un même axe parallèle à l'axe de la fibre, leur angle au sommet ayant pour valeur respectivement l'une des deux valeurs dites assez proches. En tout point de la fibre les paires de cônes relatives à chaque voie de transmission s'emboîtent l'une dans l'autre, les valeurs d'angles au sommet relatives à chaque paire étant choisies de manière que lesdites paires de cônes soient juxtaposées ou, mieux, séparées par des espaces vides de rayonnement actif.

La mise en oeuvre dudit procédé nécessite la possibilité d'injection simultanée et différenciée de flux lumineux en tout point de la face d'entrée de la fibre dans les ouvertures angulaires comprises entre les deux cônes correspondant aux différentes voies de transmission et la réception simultanée et différenciée, en sortie de fibre, de ces flux lumineux en provenance de ces différentes voies dans lesdites mêmes ouvertures.

A cette fin, le dispositif de mise en oeuvre du procédé proposé par l'invention comporte, outre une fibre à saut d'indice, à chaque extrémité de celle-ci, une optique multiaxe formée d'optiques élémentaires présentant chacune un seul axe, le nombre des axes étant égal au nombre des voies de transmission dans la fibre, les optiques élémentaires formant de l'extrémité de la fibre, dans l'espace objet, autant de conjuguées qu'il y a d'axes. Chaque optique élémentaire possède une pupille annulaire dont le contour géométrique est centré sur l'axe de la fibre, laquelle pupille fixe la fraction d'ouverture efficace de chaque voie de transmission. Les pupilles annulaires de l'ensemble de optiques élémentaires s'imbriquent avec ou sans juxtaposition les unes dans les autres de manière que, toutes ensemble, elles remplissent sensiblement la pupille totale de la fibre. A l'entrée de la fibre pour l'injection de lumière, des sources de lumière sont placées sur les conjuguées de la face d'entrée de la fibre, lesquelles sources envoient chacune, dans l'une des voies, du flux utile à travers la pupille annulaire qui lui correspond. En sortie de fibre, pour la réception, des récepteurs remplacent les sources de lumière surles conjuguées de la face de sortie de la fibre par chacune des optiques élémentaires.

Selon un premier mode de réalisation, l'optique multiaxe a une structure zonée qui consiste en l'assemblage concentrique d'anneaux lenticulaires (chaque anneau constituant une optique élémentaire) dont les centres optiques sont distincts, la structure zonée jouant elle-même le rôle de pupille de cette optique multiaxe. A l'inverse des centres optiques non confondus, l centre mécanique des anneaux lenticulaires se trouve sur l'axe de la fibre. A l'entrée de la fibre, les sources sont placées emcoïncidence avec les conjuguées de la face d'entrée de la fibre déterminées par les divers centres optiques, c'est-à-dire les divers anneaux lenticulaires. En sortie de fibre, des récepteurs sont placées aux mêmes emplacements que les sources dans le dispositif d'injection.

Selon un second mode de réalisation, l'optique multiaxe comprend en fait deux parties, à savoir une première constituée d'une ou plusieurs lentilles centrées sur un seul axe suivie d'une seconde constituée d'un élément à structure zonée multiaxe, semblable à celui utilisé dans le premier mode de réalisation, ce qui permet de répartir la convergence nécessaire à la formation des images sur plusieurs éléments et de maîtriser ainsi plus facilement les aberrations géométriques dans la formation d'image.

Selon un troisième mode de réalisation, l'optique multiaxe comprend encore deux parties, à savoir une première partie possédant toute la convergence optique et centrée sur un seul axe, et une seconde partie à structure zonée qui, à la différence de celle selon le second mode de réalisation, ne consiste pas en anneuaux lenticulaires ayant leur puissance optique propre mais en anneaux de lame prismatique, d'orientations différentes, assurant de cette façon, par le principe e la déviation, la multiplication de l'axe optique.

Selon une première variante, les parties convergente et zonée sont distinctes, tandis que selon une seconde variante, la partie zonée est incluse dans la partie convergente. Dans ce dernier cas, la partie zonée peut être située en particulier dans l'espace optique intérieur à la partie convergente comportant au moins deux éléments, à l'endroit où l'image de la face d'entrée de la fibre est rejetée à l'infini. L'avantage de cette disposition est de faire fonctionner l'élément à structure zonée en faisceau parallèle, c'est-à-dire sans aberration géométrique.

Selon un quatrième mode de réalisation, qui, en fait, peut être considéré comme une variante des trois modes précédents, l'élément à structure zonée peut être réalisé par des procédés holographiques qui lui assurent les mêmes propriétés et caractéristiques qu'aux éléments zonés utilisés dans les modes de réalisation précédents.

Selon un cinquième mode de réalisation, l'optique d'injection peut être une optique catoptrique consstituée par exemple de parties annulaires de miroirs concaves imbriqués les uns dans les autres, ayant leurs centres de courbure non confondus, cependant que les centres mécaniques des parties annulaires sont confondus et situés sur l'axe de la fibre. Cette disposition assure, pour chaque anneau réfléchissant, une image distincte de la fibre sur laquelle sont installés la source ou le récepteur correspondant à l'une des différentes voies. En particulier, selon une variante, les miroirs sont disposés de manière à former les images des sources ou des récepteurs au grandissement — 1 sur la fibre, ce qui présente l'intérêt d'obtenir des images aplanétiques.

Selon un sixième mode de réalisation, analogue au précédent, l'optique multiaxe est catadioptrique, donc constituée d'une partie réfléchissante et d'une partie réfringente, l'une des deux pouvant être utilisée pour la réalisation de l'élément à structure zonée, la combinaison de la réflexion et de la réfraction pouvant être utilisée pour l'obtention d'images très nettes à un grandissement nettement différent de — 1, ce qui permet de mieux séparer matériellement la localisation des sources par rapport à la fibre.

L'invention propose aussi la combinaison du multiplexage angulaire indiqué précédemment avec le multiplexage de l'art connu par multiplication du nombre de bandes spectrales utilisées.

L'invention sera mieux comprise à l'aide de la description suivante de quelques modes de réalisation, donnés à titre d'exemple, ladite description étant accompagnée de dessins qui représentent:

figure 1 un schéma montrant le principe du procédé de multiplexage selon l'invention.

figure 2 une vue en coupe, par son plan de symétrie, d'un premier mode de réalisation du dispositif de mise en oeuvre de ce procédé.

figure 3 une vue en coupe, par son plan de symétrie, d'un second mode de réalisation du dispositif de mise en oeuvre de ce procédé.

figure 4 une vue en coupe, par son plan de symétrie, d'un troisième mode de réalisation du dispositif de mise en oeuvre de ce procédé.

figure 5 une vue en coupe, par son plan de symétrie, d'un quatrième mode de réalisation.

figure 6 une vue en coupe, par son plan de symétrie, d'un mode de réalisation combinant le le multiplexage par multiplication du nombre de bandes spectrales de lumière utilisées avec le multiplexage selon la figure 1.

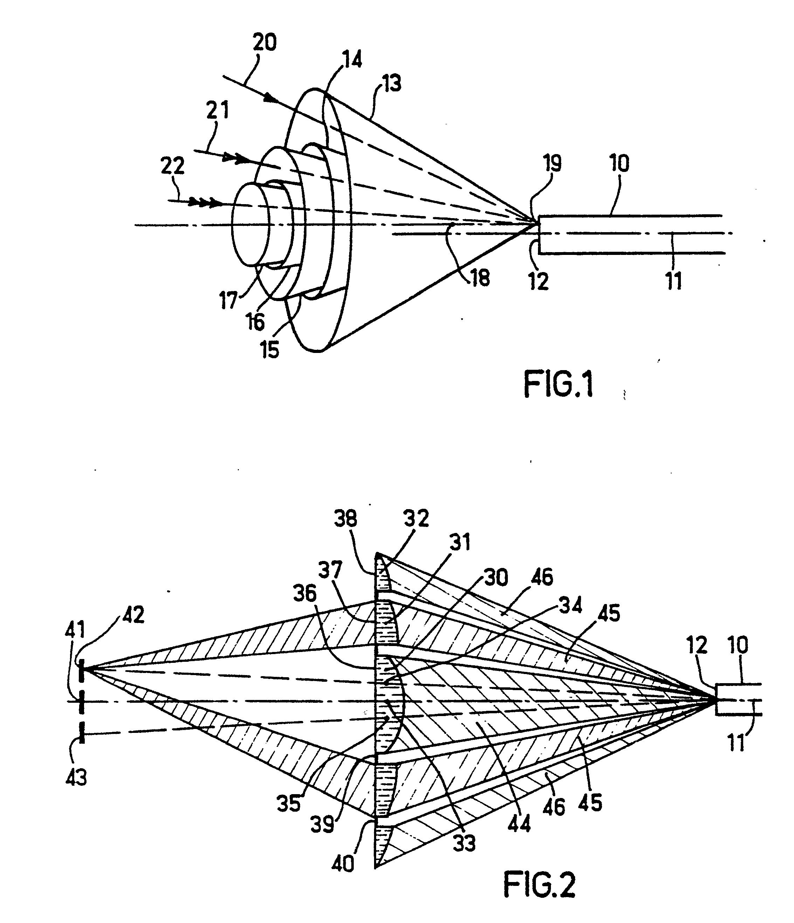

Sur la figure 1, est représentée en 10 un fibre à saut d'indice, limitée, pour simplifier, au matériau de coeur. L'axe de cette fibre est 11, l'une de ses faces, dite d'entré par la suite, est 12. Sont représentés sous les repères 13, 14, 15, 16, 17, un certain nombre de cônes de révolution d'axe et de sommet respectivement communs, à savoir, l'axe 18 parallèle à l'axe 11 de la fibre, et le sommet 19 situé sur la face d'entrée 12. Ces cônes s'emboîtent les uns dans les autres, leur demi-angle au sommet allant en décroissant du cône 13 au cône 17, celui du cône 13 étant au plus égal à l'angle d'acceptance ou dit d'ouverture de la fibre. On supposera l'existence de pareils cônes d'axe parallèle à celui de la fibre et ayant pour sommet tout autre point de la face d'entrée 12. Ces cônes délimitent des fractions disjointes ou au plus juxtaposées d'ouverture angulaire de la fibre, à savoir les fractions d'ouverture comprises entre les cônes respectivement 13 et 14 puis 15 et 16 et à l'intérieur du cône 17. D'après la propriété de la fibre concernant la conservation e l'angle d'un rayon avec l'axe de la fibre au cours de sa propagation dans la fibre, tout flux de lumière envoyé en tout point de l'entrée de la fibre selon des rayons tels que 20, 21 ou 22 à l'intérieur de l'une des fractions d'ouverture angulaire précédemment déterminées émerge, en sortie de fibre, dans une fraction d'ouverture angulaire de révolution autour d'un axe parallèle à l'axe de la fibre, identique, à celle à l'entrée sans qu'il puisse se produire de mélange angulaire avec un flux envoyé à l'entrée, dans une fraction d'ouverture angulaire différente. Selon le procédé de l'invention, la vibre 10 est munie à l'entrée de moyens d'injection directionelle de trois flux indépendants remplissant chacun en tout point de l'entrée l'une des fractions d'ouverture angulaire définie et, en sortie, de moyens indépendants de réception directionnelle de ces trois flux. Il est établi ainsi dans ce cas, au sein de la même fibre, trois voies de transmission indépendantes.

Il va de soi que le nombre de voies réalisables est fonction de la fraction d'ouverture angulaire de la fibre affectée à chaque voie. Dans la suite sont décrits des modes de réalisation de dispositifs de mise en oeuvre du procédé qui, à titre d'exemple, comportent, sauf exception, trois voies.

La figure 2 représente un premier mode de réalisation. On retrouve sur cette figure la fibre 10 avec son axe 11 et sa face d'entrée 12. A l'entrée, la fibre est munie d'une optique multiaxe à structure zonée constituée de plusieurs éléments lenticulaires 30, 31, 32, à savoir 30 un élément circulaire et 31, 32 des éléments annulaires. Tous les éléments sont centrés mécaniquement sur l'axe 11 de la fibre. Leurs centres optiques sont respectivement les points 33, 34, 35. La pupille de l'optique est matérialisée par sa structure zonée dont le diamètre externe est dimensionné de telle sorte qu'il puisse être sensiblement confondu avec celui de la pupille de la fibre, c'est-à-dire que son rayon est vu à partir de la face d'entrée de la fibre sous un angle égal sensiblement à l'angle d'ouverture de la fibre. Les éléments lenticulaires 30, 31, 32 divisent la pupille de l'optique en plusieurs parties transparentes disjointes, à savoir respectivement la partie circulaire centrale 36 et les parties annulaires 37, 38, séparées par des parties opaques 39, 40, ces différentes parties étant centrées sur le centre de la pupille, c'est-à-dire sur l'axe de la fibre. Les images conjuguées de la face d'entrée 12 de la fibre par chacun des éléments 30, 31, 32 sont distinctes, respectivement 41, 42, 43. D'autre part, les éléments lenticulaires sont dimensionnés et postionnés de telle sorte que la conjuguée en retour inverse de l'une quelconque des images 41, 42, 43 par un élément lenticulaire de l'optique multiaxe autre que celui qui lui donne naissance n'a pas de partie commune avec la face d'entrée 12. De ce fait, la fibre ne reçoit e chacune des sources de lumière disposées selon les conjuguées respectivement 41, 42, 43 et émettant en direction de la fibre, que le flux ayant traversé l'élément lenticulaire respectivement 30, 31, 32 et délimité par la partie de pupille respectivement 36, 37, 38, les trois flux reçus dans la fibre étant contenus chacun dans l'une des fractions d'ouverture angulaire s'appuyant sur ces parties de pupilles, donc disjointes. Ces fractions d'ouverture angulaire sont sur la figure 2 celles des faisceaux de révolution respectivement 44, 45, 46 autour de l'axe de la fibre et issus des sources respectivement 41, 42, 43, le faisceau 45 étant représenté complètement à partir de la source 42 et les faisceaux 44, 46 seulement du côté fibre pour la clarté du dessin. Ces différents faisceaux se propagent chacun dans la fibre en conservant l'ouverture angulaire qui lui est propre. Une optique multiaxe analogue à celle précédemment décrite est placée en sortie de fibre, tête bêche par rapport à celle d'entrée, en référence au sens de la lumière et à l'axe de la fibre, des récepteurs étant placés aux lieux et places des sources. Chaque récepteur reçoit l'un des faisceaux sans détruire la différenciation angulaire entre les trois faisceaux réalisée à l'entrée, un système de transmission à trois voies indépendantes étant ainsi réalisé.

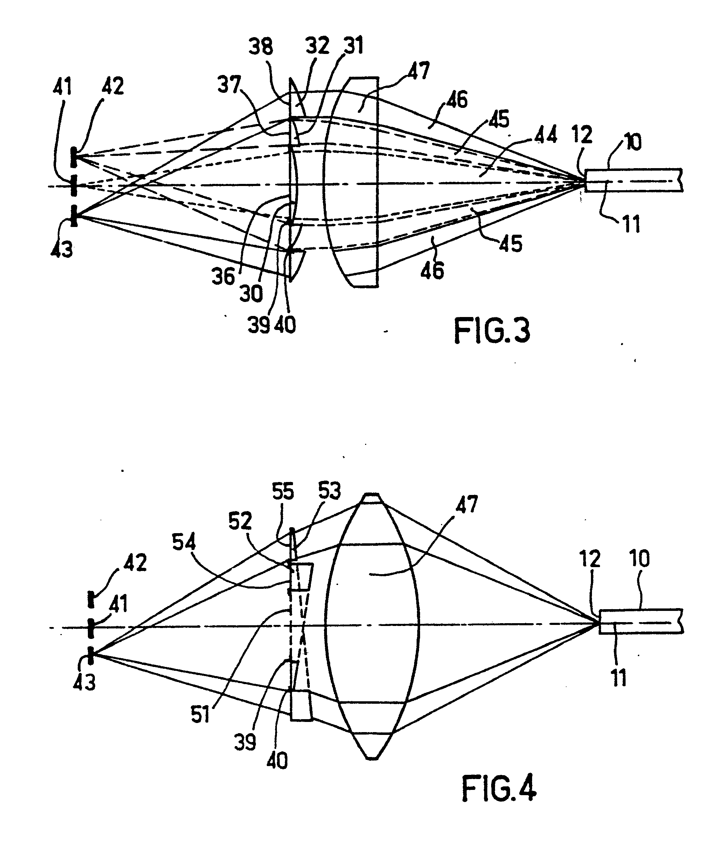

La figure 3 représente un second mode de réalisation du dispositif de mise en oeuvre du procédé selon l'invention peu différent, dans son principe, du premier mode de réalisation. L'optique multiaxe, à l'entrée comme en sortie, comprend, en plus de l'élément à structure zonés du premier mode décrit précédemment, une lentille ou ensemble de lentilles ayant pour axe optique l'axe de la fibre. Sur la figure 3, cette lentille est la lentille 47. La convergence de cette lentille permet, plus facilement qu'avec le seul élément zoné, d'atteindre l'ouverture requise et de maîtriser les problèmes d'aberration géométrique de formation d'image. Sur cette figure, en plus de la lentille 47, on retrouve tous les autres éléments de la figure 2 avec les mêmes repères numériques. Le dispositif comporte trois voies indépendantes empruntées par les faisceaux respectivement 44, 45, 46, issus des sources respectivement 41, 42, 43.

La figure 4 représente un troisième mode de réalisation du dispositif de mise en oeuvre du procédé dont l'optique multiaxe comporte l'élément convergent 47, centré sur l'axe 11 de la fibre et un élément convergent 47, centré sur l'axe 11 de la fibre et un élément zoné qui, au lieu d'être formé d'éléments lenticulaires comme sur la figure 2, est formé, d'une part, des éléments en forme d'anneaux prismatiques d'orientations différentes 52 et 53 et, d'autre part, de l'orifice 51 de l'anneau 52, anneaux et orifice étant centrés sur l'axe 11 de la fibre. Les orientations différentes des prismes assurent la formation des trois conjuguées différentes 41, 42, 43 de la face d'entrée 12 de la fibre par l'ensemble de l'optique, à savoir, la conjuguée 41 à travers l'orifice 51 et les conjuguées 42, 43 à travers les anneaux prismatiques respectivement 52 et 53. Comme précédemment, trois sources de lumière indépendantes disposées respectivement selon 41, 42, 43, émettant trois flux indépendants dans la fibre sous les trois fractions disjointes d'ouverture de fibre s'appuyant respectivement sur la partie centrale de pupille 51 et les parties transparentes de pupille annulaires 54 et 55 séparées par les parties opaques annulaires 39 et 40, lesdits flux indépendants étants reçus en sortie de fibre comme déjà dit par une optique analogue à celle de l'entrée et munie de récepteurs.

Tous ces modes de réalisation peuvent faire l'objet de variantes. A titre d'exemple, selon une variante du second mode de réalisation, l'élément convergent est constitué de plusieurs lentilles et l'élément zoné lenticulaire est inclus entre deux de ces lentilles. Selon une variante du troisième mode e réalisation, on adopte une même positon pour l'élément zoné prismatique. Plus particulièrement, l'élément zoné prismatique est placé dans l'élément convergent à l'endroit où l'image de la face d'entrée de la fibre est rejetée à l'infini de manière à faire fonctionner l'élément zoné prismatique en faisceau parallèle, c'est-à-dire sans aberration géométrique.

Selon un quatrième mode de réalisation qui, en fait, peut être considéré comme une variante commune aux trois modes de réalisation précédemment décrits, l'élément zoné de l'optique multiaxe utilisé est un élément obtenu par des procédés holographiques.

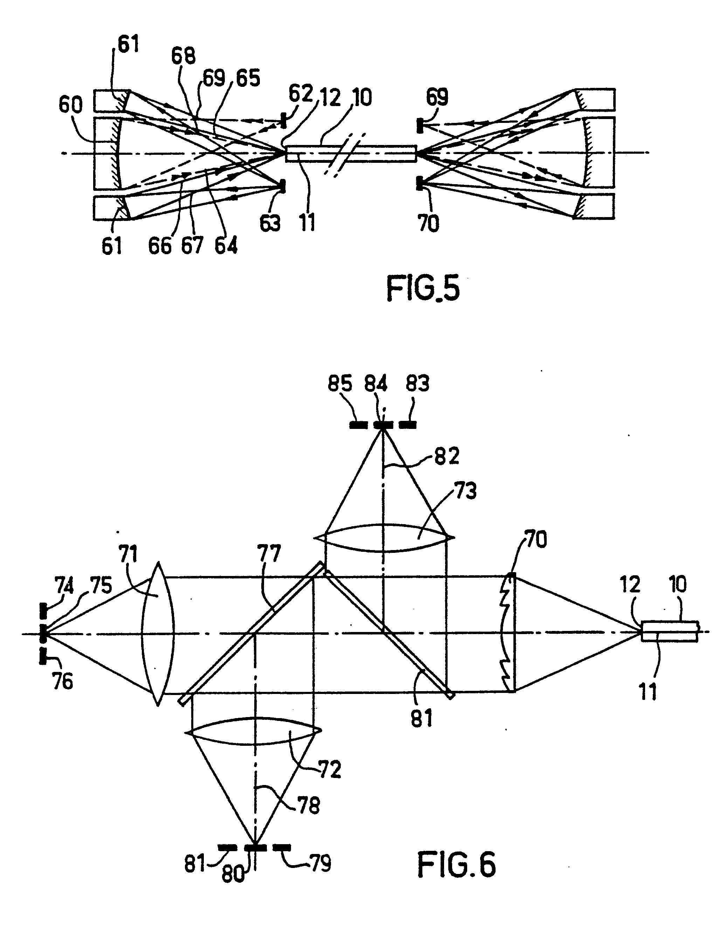

La figure 5 représente un cinquième mode de réalisation du dispositif de mise en oeuvre du procédé. On retrouve sur cette figure la fibre 10 d'axe 11 et de face d'entrée 12. L'optique multiaxe à chaque extrémité de la fibre est du type catoptrique avec structure zonée constituée de miroirs concaves, à savoir, un miroir central et autour de celui-ci, des miroirs annulaires imbriqués les uns dans les autres, leurs centres mécaniques étant confondus et situés sur l'axe 11 de la fibre, tandis que leurs centres de courbure au contraire ne sont ni confondus, ni situés sur l'axe de la fibre. Pour la facilité de la représentation, sur la figure 5, le nombre de miroirs a été réduit à deux, à savoir, du côté entrée de fibre, les miroirs respectivement 60 et 61. Les conjuguées de la face 12 par ces miroirs sont respectivement 62 et 63. Les conjuguées de 62 et 63 per les miroirs respectivement 61 et 60 sont éloignées de 12, si bien que des sources de lumière placées sur 62 et 63 n'envoient de la lumière, dans la fibre, que selon les deux fractions disjointes de l'ouverture de la fibre correspondant aux faisceaux de révolution autour de l'axe de la fibre et limités par les rayons respectivement double flèche 64 et 65 et simple flèche d'une part 66, 67 et d'autre part 68, 69 s'appuyant sur les miroirs respectivement 60 et 61, les flux véhiculés dans les faisceaux étant indépendants. Sur la figure 5 on a représenté l'optique multiaxe en sortie de fibre identique à celle d'entrée mais placée tête bêche. Après propagation dans la fibre, sans mélange angulaire, lesdits flux sont reçus de façon indépendante sur les récepteurs 69, 70 placés en lieu et place des sources 62, 63. Le système réalise ainsi deux voies de transmission indépendantes. De façon avantageuse les miroirs sont disposés de façon à ce que les images des sources ou des récepteurs sur la fibre soient formées au grandissement — 1, de manière que lesdites images soient aplanétiques.

Selon un sixième mode de réalisation que l'homme de l'art concevra facilement à la lumière de ce qui précède, l'optique multiaxe est catadioptrique, donc constituée d'une partie réfléchissante et d'une partie réfringente, la structure zonée réalisant le fractionnement de l'ouverture angulaire de la fibre étant incorporée dans l'une ou l'autre des parties. D'une façon avantageuse cette combinaison de réflexion et réfraction est mise à profit pour faire en sorte que la formation des images des sources sur la fibre se fasse avec un grandissement nettement différent de — 1, ce qui permet lors de la construction des optiques de localiser les sources assez loin de la fibre.

L'invention prévoit d'augmenter le nombre de voies transmises en combinant le multiplexage de l'art connu par multiplication du nombre de longueur d'ondes de lumière utilisée avec le multiplexage angulaire décrit précédemment.

Selon une variante, est utilisée à chaque extrémité de fibre une seule optique multiaxe de structure identique à l'une de celles décrites précédemment, tandis que les sources de lumière et les récepteurs comportent chacun plusieurs éléments juxtaposés, soit émettant, chacun, une lumière dans l'une deslongueurs d'onde choisies, soit recevant, chacun, l'une de ces longueurs d'onde.

Selon une seconde variante, plusieurs optiques multiaxes identiques à celles décrites sont utilisées à chaque extrémité de fibre en nombre égal à celui des longueurs d'onde à transmettre, tandis que ces optiques sont munies chacune soit de sources émettant toutes dans l'une des longueurs d'onde, soit de récepteurs recevant et détectant tous l'une de ces longueurs d'onde. La figure 6 indique schématiquement le montage optique relatif à ce cas lors de l'utilisation de trois longueurs d'onde. On y retrouve la fibre 10 d'axe 11. A l'entrée, se trouve disposée face à la fibre une première optique multiaxe analogue à celle de la figure 3 et constituée de la structure zonée 70 et de la lentille convergente 71. Des sources de lumière émettant par exemple dans le rouge placées sur les conjuguées 74, 75, 76 de l'entrée 12 de la fibre, permettent par cette optique multiaxe l'établissement par différenciation angulaire, de trois voies de transmission en lumière rouge à travers la fibre 10. 77 représente un miroir dichroïque transparent à la lumière rouge et réfléchissant par exemple la lumière bleue. Une lentille 72 est placée sur l'axe 78 réfléchi de l'axe 11 par le miroir 77. L'élément zoné 70 et cette lentille 72 constituent une seconde optique multiaxe. Les conjuguées de l'entrée 12 de la fibre par cette seconde optique sont 79, 80, 81. Des sources de lumières émettant dans le bleu disposées sur ces conjuguées, permettent l'établissement par différenciation angulaire de trois autres voies de transmission en lumière bleue à travers la fibre 10 superposées, angulairement parlant, avec celles dans le rouge. 81 représente un miroir dichroïque transparent dans le rouge et le bleu mais réfléchissant par exemple le vert. Une troisième lentille 73 placée sur l'axe 82 réfléchi de l'axe 11 par le miroir 81, constitue avec l'élément zoné une troisième optique multiaxe. Les conjuguées de 12 par cette troisième optique sont 83, 84, 85. Des sources de lumière émettant dans le vert disposées sur cesconjuguées permettent l'établissement dans la fibre de trois autres voies de transmission en lumière verte, soit en tout 9 voies. En sortie de fibre est disposé un ensemble optique identique à celui à l'entrée précédemment décrit, les sources de lumières émettant dans respectivement le bleu, le vert, le rouge étant remplacées par des récepteurs sensibles dans respectivement le bleu, le vert, le rouge.

## Revendications

1. Procédé de multiplexage de voies de transmission d'information par onde lumineuse au sein d'une fibre optique à saut d'indice, caractérisé en ce que chaque voie est constituée de rayons de lumière se propageant à l'intérieur de la fibre par réflexions totales successives à l'interface coeur gaine de la fibre, lesdits rayons étant groupés en fonction de leur angle avec l'axe de la fibre de telle sorte à être situés pour chaque voie en tout point de la fibre entre deux cônes ayant pour sommet commun ledit point et de revolution autour d'un axe commun paallèle à l'axe de la fibre, lesdits deux cônes définissant la fraction d'ouverture angulaire de la fibre affectée à chaque voie, les fractions d'ouverture affectées à toutes les voies étant au plus juxtaposées les unes par rapport aux autres ou mieux séparées par des fractions d'ouverture de la fibre vides de rayonnement actif, des flux de lumière indépendants étant injectés dans chacune des voies en entrée de la fibre à l'aide de moyens spécifiques de la géométrie angulaire de la fraction d'ouverture affectée à chaque voie, et lesdits flux ainsi propagés dans lesdites voies étant récupérés en sortie de la fibre à l'aide de moyens spécifiques analogues.

2. Dispositif de mise en oeuvre du procédé selon la revendication 1, caractérisé en ce qu'il comporte, outre une fibre optique à saut d'indice, à chaque extrémité de celle-ci, une optique multiaxe destinée à constituer lesdits moyens spécifiques pour permettre l'injection de lumière dans les différentes voies ou la récupération de celle-ci, cette optique multiaxe étant formée d'optiques élémentaires présentant chacune un seul axe, le nombre des axes étant égal au nombre des voies de transmission dans la fibre, les optiques élémentaires formant de l'extrémité correspondante de la fibre autant de conjuguées qu'il y a d'axes, chaque optique élémentaire possédant une pupille annulaire de contour géométrique centré sur l'axe de la fibre, laquelle pupille annulaire fixe la fraction d'ouverture de fibre affectée à chaque voie de transmission, les pupilles annulaires de l'ensemble des optiques élémentaires s'imbriquant avec ou sans juxtaposition les unes dans les autres de manière à remplir toutes ensemble sensiblement la totalité de la pupille de la fibre, ledit dispositif comportant en outre, d'une part du côté de l'entrée de la fibre, des sources de lumière indépendantes placées sur les conjuguées de l'extrémité d'entrée de la fibre par les optiques élémentaires situées du côté de ladite entrée, lesdites sources envoyant chacune, dans l'une des voies, le flux utile à travers la pupille annulaire qui lui correspond et, d'autre part du côté de la sortie de la fibre, des récepteurs de lumière placés sur les conjuguées de ladite extrémité de sortie de la fibre par les optiques élémentaires situées du côté de cette sortie, lesdits récepteurs recevant chacun le flux axant transité par la voie correspondante.

3. Dispositif selon la revendication 2, caractérisé en ce que chaque optique multiaxe comporte un élément à structure zonée qui consiste en l'assemblage concentrique d'anneaux lenticulaires centrés mécaniquement sur l'axe de la fibre, constituant chacun une desdites optiques élémentaires, et dont les centres optiques sont distincts, la structure zonée jouant elle-même le rôle de pupille fractionnée annulairement de cette optique multiaxe.

4. Dispositif selon la revendication 2, caractérisé en ce que chaque optique multiaxe comprend deux parties, à savoir, une première partie convergente constituée d'une ou plusieurs lentilles centrées sur un seul axe et une seconde partie constituée d'un élément à structure zonée semblable à celui selon la revendication 3, mais de puissance plus faible.

5. Dispositif selon la revendication 2, caractérisé en ce que l'optique multiaxe comprend deux parties, à savoir, une première partie convergente constituée d'une ou plusieurs lentilles centrées sur un seul axe et une seconde partie à structure zonée consistant en anneaux de lame prismatique d'orientation différente.

6. Dispositif selon la revendication 5, caractérisé en ce que la partie zonée est incluse dans la partie convergente.

7. Dispositif selon la revendication 5, caractérisé en ce que partie convergente et partie zonée sont distinctes.

8. Dispositif selon l'une des revendications 2 à 4, caractérisé en ce que l'élément à structure zonée est réalisé à partir de procédés holographiques.

9. Dispositif selon la revendication 2, caractérisé en ce que l'optique multiaxe est du type catoptrique constituée de parties annulaires de miroirs concaves imbriqués les uns dans les autres, ayant leurs centres de courbure non confondus tandis que leurs centres mécaniques sont confondus et situés sur l'axe de la fibre.

10. Dispositif selon la revendication 9, caractérisé en ce que les miroirs sont disposés de façon à former les conjuguées des extrémités de fibre au grandissement — 1 et à fonctionner aplanétiquement.

11. Dispositif selon la revendication 2, caractérisé en ce que l'optique multiaxe est du type catadioptrique, donc constituée d'une partie réfléchissante et d'une partie réfringente, l'une d'elles présentant une structure zonée semblable à celle selon la revendication 3 ou 9, mais de puissance plus faible.

12. Procédé de multiplexage de voies de transmission d'information par ondes lumineuses au sein d'une fibre optique à saut d'indice, caractérisé en ce qu'il combine le multiplexage de l'art connu par multiplication des bandes spectrales utilisées et le multiplexage angulaire selon la revendication 1, les lumières de différentes bandes spectrales parcourant au sein de la fibre les mêmes voies angulaires quelle que soit la bande spectrale, la lumière étant, respectivement, injectée dans chaque voie en entrée de la fibre, et reçue en sortie à l'aide de moyens spécifiques de chaque bande spectrale et de la géométrie angulaire de la fraction d'ouverture affectée à ladite voie.

13. Dispositif de mise en oeuvre du procédé selon la revendication 12, caractérisé en ce que les systèmes optiques à l'entrée et à la sortie de fibre sont ceux selon l'une des revendications 2 à 11, les sources étant constituées d'éléments juxtaposés, en nombre égal à celui des bandes spectrales utilisées, émettant, chacun, dans l'une des bandes spectrales, les récepteurs, étant constitués d'éléments en nombre égal à celui des bandes spectrales, chaque élément n'étant sensible qu'à l'une de ces bandes spectrales.

14. Dispositif de mise en oeuvre du procédé selon la revendication 12, caractérisé en ce que la fibre est munie à l'entrée comme à la sortie d'un système optique constitué de plusieurs optiques multiaxes selon l'une des revendications 2 à 11, comportant éventuellement des éléments communs, ces optiques étant en nombre égal à celui des bandes spectrales utilisées, les conjuguées de l'extrémité d'entrée de la fibre par le système optique d'entrée étant munies de sources émettant, toutes, dans l'une des bandes spectrales, et les conjuguées de l'extrémité de sortie de la fibre par le système optique de sortie étant munies de récepteurs sensibles, tous, dans l'une des bandes spectrales, des miroirs dichroïques effectuant, respectivement, la superposition à l'entrée, et la séparation en sortie, des flux des différentes bandes spectrales utilisées.

**Patentansprüche**

1. Verfahren zum Multiplexen von Kanälen zum Übertragen von Informationen mittels über eine Stufenindex-Faser übertragener Lichtwellen, dadurch gekennzeichnet, daß jeder Kanal aus Lichtstrahlen besteht, die durch aufeinanderfolgende totale Totalreflektionen an der Übergangsfläche zwischen Kern und Mantel in der Faser fortschreiten und in Abhängigkeit ihres Winkels zur Faserachse derart angordnet sind, daß sie sich für jeden Kanal an jedem Punkt in der Faser zwischen zwei Kegeln befinden, deren gemeinsamer Scheitelpunkt durch diesen Punkt gebildet wird und die um eine gemeinsame Achse parallel zur Faserachse rotationssymmetrisch sind, wobei die zwei Kegel den jedem Kanal zugeordneten Teil des Öffnungwinkels der Faser bestimmen, wobei die allen Kanäle zugeordneten Öffnungsteile einander allenfalls benachbart sind oder vorzugsweise voneinander durch Öffnungsteile der Faser getrennt sind, die frei von aktiver Strahlung sind, wobei unabhängige Lichtströme in jeden Kanal in den Fasereingang eingespeist werden durch Mittel, die spezifisch für die Winkelgeometrie des jedem Kanal zugeordneten Öffnungsteils sind und daß die in den Kanälen fortschreitenden Lichtströme am Faserausgang durch analoge spezifische Mittel wiedergewonnen werden.

2. Vorrichtung zur Durchführung des Verfahrens nach Anspruch 1, dadurch gekennzeichnet, daß außer einer Stufenindex-Faser ein Mehrachsen-Optiksystem an jedem Ende dieser Faser zur Bildung der spezifischen Mittel zum Einspeisen von Licht in die verschiedenen Kanäle oder zu seiner Wiedergewinnung vorgesehen ist, daß das Mehrachsen-Optiksystem elementare Optiken mit je einer einfachen Achse enthält, wobei die Anzahl der Achsen gleich der Anzahl der Übertragungskanäle in der Faser ist, wobei die elementaren Optiken genau so viele konjugierte Bilder des entsprechenden Faserendes bilden, wie es Achsen gibt, wobei jede elementare Optik eine ringförmige Pupille mit einer geometrischen Kontur hat, die in bezug auf die Faserachse zentriert ist, und wobei die ringförmige Pupille den jedem Übertragungskanal zugeordneten Teil der Faseröffnung bestimmt, wobei die ringförmigen Pupillen aller elementaren Optiken, mit oder ohne Aneinanderlagerung, in einander passen, so daß sie zusammen im wesentlichen die ganze Pupille der Faser ausfüllen, wobei an der Eintrittsseite der Faser unabhängige Lichtquellen an den Stellen der von den elementaren Optiken gebildeten konjugierten Bilder des Fasereingangs angeordnet sind, und wobei jede der Lichtquellen das Nutzlicht in einen der Kanäle durch die zugeordnete ringförmige Pupille einstrahlt, und wobei an der Austrittsseite der Faser Lichtempfänger an den Stellen der von den seitlich dieser Austrittsseite angeordneten elementaren Optiken gebildeten konjugierten Bilder des anderen Faserendes angeordnet sind und wobei jeder Empfänger das im entsprechenden Kanal übertragene Licht empfängt.

3. Vorrichtung nach Anspruch 2, dadurch gekennzeichnet, daß jedes Mehrachsen-Optiksystem ein Element mit Zonenstruktur enthält, das in konzentrischer Anordnung linsenförmige Ringe enthält, die zur Faserachse mechanisch zentriert sind, wobei jeder Ring eine der elementaren Optiken bildet, deren optischen Zentren nicht zusammenfallen, wobei die Zonenstruktur selbst die ringförmig geteilte Pupille des Mehrachsen-Optiksystems bildet.

4. Vorrichtung nach Anspruch 2, dadurch gekennzeichnet, daß jedes Mehrachsen-Optiksystem zwei Teile enthält, von denen der erste ein Konvergenzteil mit einem oder mehreren, um eine gemeinsame Achse zentrierten Linse ist und der zweite Teil ein Element mit einer Zonenstruktur nach Anspruch 3, jedoch mit schwächerer Leistung.

5. Vorrichtung nach Anspruch 2, dadurch gekennzeichnet, daß der Mehrachsen-Optiksystem zwei Teile enthält, von denen der erste ein Konvergenzteil mit einem oder mehreren um eine gemeinsame Achse zentrierten Linsen ist und der zweite Teil ein Zonenstruktur mit verschiedenen orientierten prismatischen Ringen hat.

6. Vorrichtung nach Anspruch 5, dadurch gekennzeichnet, daß der Zonenteil innerhalb des Konvergenzteils angeordnet ist.

7. Vorrichtung nach Anspruch 5, dadurch gekennzeichnet, daß der Konvergenzteil und der Zonenteil voneinander getrennt sind.

8. Vorrichtung nach einem der Ansprüche 2 bis 4, dadurch gekennzeichnet, daß das Element mit Zonenstruktur mit holographischen Verfahren verwirklicht wird.

9. Vorrichtung nach Anspruch 2, dadurch gekennzeichnet, daß das Mehrachsen-Optiksystem vom Lichtreflektionstyp ist und ringförmige Teile konkaver Spiegel enthält, die ineinander passen, wobei deren Krümmungsmittelpunkte nicht zusammenfallen, während ihre mechanischen Mitten zusammenfallen und auf der Faserachse liegen.

10. Vorrichtung nach Anspruch 9, dadurch gekennzeichnet, daß die Spiegel derart ausgebildet sind, daß sie konjugierte Bilder der Faserenden mit einer Vergrößerung — 1 bilden und als aplanatische Elemente wirken.

11. Vorrichtung nach Anspruch 2, dadurch gekennzeichnet, daß das Mehrachsen-Optiksystem vom katadioptrischen Typ ist, d. h. es enthält einen Reflektions- und einen Brechungsteil, von denen einer eine Zonenstruktur nach Anspruch 3 oder 9 hat, jedoch mit schwächerer Leistung.

12. Verfahren zum Multiplexen von Kanälen zum Übertragen von Informationen mittels über eine Stufenindex-Faser übertragener Lichtwellen, dadurch gekennzeichnet, daß das bekannte Multiplexsystem mittels Vervielfachung der benutzten Spektralbänder und das winkelförmige winkelbezogene Multiplexsystem nach Anspruch 1 kombiniert werden, wobei das Licht mehrerer Spektralbänder durch die Faser über die gleichen winkelförmigen Winkelkanäle unabhängig vom Spektralband fortschreitet und in jeden Kanal beim Fasereingang eingespeist und am Ausgang durch Mittel empfangen wird, die spezifisch für jedes Spektralband und für die Winkelgeometrie des Öffnungsteils entsprechend des Kanals sind.

13. Vorrichtung zur Durchführung des Verfahrens nach Anspruch 12, dadurch gekennzeichnet, daß die optischen Systeme am Fasereingang und am Faserausgang nach einem oder mehreren der Ansprüche 2 bis 11 ausgebildet sind, wobei die Quellen aus aneinander benachbarten Elementen gleich der Anzahl der benutzten Spektralbänder bestehen und jeweils Licht in einem der Spektralbänder emittieren, während die Empfänger aus einer Anzahl von Elementen gleich der Anzahl von Spektralbändern bestehen, wobei jedes Element nur für eines der Spektralbänder empfindlich ist.

14. Vorrichtung zur Durchführung des Verfahrens nach Anspruch 12, dadurch gekennzeichnet, daß die Faser am Eingang und am Ausgang mit einem Optiksystem mit einer Vielzahl von Mehrachsen-Optiksystemen nach einem oder mehreren der Ansprüche 2 bis 11 versehen ist, welche gemeinsame Elemente enthalten können, wobei die Anzahl der optischen Systeme gleich der Anzahl der benutzten Spektralbänder ist, wobei an den Stellen der vom Eingangsoptiksystem erzeugten konjugierten Bilder des Fasereingangs Emissionsquellen vorgesehen sind, die jeweils Licht in einem der Spektralbänder emittieren, und wobei an den Stellen der vom Ausgangsoptiksystem erzeugten konjugierten Bilder des Faserausgangs Empfängern vorgesehen sind, die je für ein Spektralband empfindlich sind, wobei dichroitische Spiegel die Lichtströme der verschiedenen Spektralbänder am Eingang überlagern und sie am Ausgang voneinander trennen.

**Claims**

1. A method of multiplexing data-transmission channels using light waves transmitted along a step-index optical fibre, characterized in that each channel is formed by light rays which propagae along the fibre through consecutive total reflections at the core/cladding interface of the fibre, said rays being grouped in accordance with their angles with the fibre axis in such a way that for each channel at any point of the fibre the rays are situated between two cones whose common apex is formed by said point and which are rotationally symmetrical about a common axis parallel to the fibre axis, said two cones defining the angular aperture portion of the fibre relating to each channel, the aperture portions relating to the channels being juxtaposed relative to each other or, preferably, separated from each other by aperture portions of the fibre which are void of active radiation, independent light being injected into each channel at the fibre input by means which are specific of the angular geometry of the apeture portion relating to each channel, and the light flexes thus propagating in said channels being recovered at the output of the fibre by similar specific means.

2. A device for carrying out the method as claimed in Claim 1, characterized in that, in addition to a step-index optical fibre, it comprises, at each end of said fibre, a multi-axial optical system, intended to constitute said specific means for injecting light into the different channels of for recovering said light, which system comprises optical elements each having a single axis, the number of axes being equal to the number of transmision channels in the fibre, the optical elements forming as many conjugate images of the corresponding fibre end as there are axes, each optical element having an annular pupil which is centred relative to the fibre axis, which annular pupil determines the portion of the fibre aperture concerned with each transmission channel, the annular pupils of all the optical elements enclosing each other with or without juxtaposition in such a way that together they fill substantially the entire pupil of the fibre, which device also comprises, at the fibre-input side, independent light sources arranged at the locations of the conjugate images of the fibre input end formed by the optical elements situated at said input side, which sources each emit the useful flux into one of the channels through the corresponding annular pupil, and at the fibre output side light receivers arranged at the locations of the conjugate images of this fibre output end formed by the optical elements situated at said output side, which receivers each receive the flux conveyed by the corresponding channel.

3. A device as claimed in Claim 2, characterized in that the multi-axial optical system has a zone structure comprising a concentric arrangement of annular lens zones which are mechanically centred relative to the fibre axis, which zones each constitute one of said optical elements and whose optical centres are distinct, the zone structure itself forming the annularly divided pupil of said multi-axial optical system.

4. A device as claimed in Claim 1, characterized in that the multi-axial optical system comprises two parts, namely a first convergence part comprising one or a plurality of lenses centred on a single axis and a second part comprising an element with a zone structure similar to that claimed in Claim 3, but having a smaller power.

5. A device as claimed in Claim 1, characterized in that the multi-axial optical system comprises two parts, namely a fist convergent part comprising one or a plurality of lenses centred on a single axis, and a second part having a zone structure comprising differently oriented prismatic rings.

6. A device as claimed in Claim 5, characterized in that the zonal part is arranged within the convergence part.

7. A device as claimed in Claim 5, characterized in that the convergence part and the zonal part are distinct.

8. A device as claimed in any of the Claims 2 to 4, characterized in that the element with a zone structure is formed by means of holographic methods.

9. A device as claimed in Claim 2, characterized in that the multi-axial optical system is of the catoptric type, comprising annular portions of concave mirrors which enclose each other, their centres of curvature being non-coincident and their mechanical centres coinciding and being situated on the fibre axis.

10. A device as claimed in Claim 9, characterized in that mirrors are arranged so as to form conjugate images of the fibre ends with a magnification of — 1 and to provide aplanetic operations.

11. A device as claimed in Claim 2, characterized in that the multi-axial optical system is of the catadioptric type, i.e. comprising a reflecting part and a refracting part, one of them having a zone structure similar to that claimed in Claim 3 or 9, but having a smaller power.

12. A method of multiplexing data-transmission channels using light waves transmitted along a step-index optical fibre, characterized in that it combines prior-art multiplexing through multiplication of the spectral bands that are used and the angular multiplexing method as claimed in Claim 1, light of different spectral bands travelling along the fibre along the same angular channels regardless of the spectral band, the light being injected into each channel or received at the output by means which are specific of each spectral band and of the angular geometry of the aperture portion corresponding to said channel.

13. A device for carrying out the method as claimed in Claim 12, characterized in that the optical systems at the input and the output of the fibre are systems as claimed in any of the Claims 2 to 11, the sources comprising a number of juxtaposed elements equal to the number of spectral bands used, which elements each emit light in one of the spectral bands, whilst the receivers comprise a number of elements equal to the number of spectral bands, each element being only sensitive to only one of said spectral bands.

14. A device for carrying out the method as claimed in Claim 12, characterized in that at the input and the output the fibre is provided with an optical system comprising a plurality of multi-axial optical systems as claimed in any of the Claims 2 to 11, which systems may comprise common elements, the number of optical systems being equal to the number of spectral bands used, whilst at the locations of the conjugate images of the fibre input end, formed by the optical system at the input sources, sources are arranged which each emit light in one of the spectral bands, and at the location of the conjugate images of the fibre output end, formed by the optical system at the output, receivers are arranged which are each sensitive to one spectral band, dichroic mirrors superimposing the fluxes of the different spectral bands used at the input or separating them at the output.

FIG.1

FIG.2

FIG.3

FIG.4

FIG.5

FIG.6